# FASCICULE DE BREVET EUROPEEN

(11) **EP 0 811 576 B1**
(45) Date de publication et mention de la délivrance du brevet: **05.09.2001**
(21) Numéro de dépôt: 97401215.5
(22) Date de dépôt: 02.06.1997
(51) Int. Cl.: C01B 21/04, C01B 23/00

(54) **Procédé et dispositif de préparation d'un fluide cryogénique à l'état liquide de haute pureté**
Verfahren und Einrichtung für die Herstellung eines sehr reinen flüssigen kryogenen Fluids
Process and apparatus for the preparation of a cryogenic liquid fluid of high purity

(30) Priorité: 07.06.1996 FR 9607100
(43) Date de publication de la demande: 10.12.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Gary, Daniel, 78180 Montigny Le Bretonneux (FR)
(74) Mandataire: Le Moenner, Gabriel

(56) Documents cités:
- EP-A- 0 662 595
- EP-A- 0 671 359
- DATABASE WPI Section Ch, Week 9011 Derwent Publications Ltd., London, GB; Class E36, AN 90-078652 XP000182417 & JP 02 030607 A (KOBE STEEL KK) , 1 février 1990
- PATENT ABSTRACTS OF JAPAN vol. 014, no. 460 (M-1032), 4 octobre 1990 & JP 02 183789 A (HITACHI LTD;OTHERS: 01), 18 juillet 1990
- DATABASE WPI Section Ch, Week 9821 Derwent Publications Ltd., London, GB; Class J01, AN 98-238453 XP002082557 & RU 2 091 683 C (GELIIMASH STOCK CO) , 27 septembre 1997
- DATABASE WPI Section Ch, Week 8929 Derwent Publications Ltd., London, GB; Class E36, AN 89-210852 XP002082558 & JP 01 148703 A (NIPPON STEEL CORP) , 12 juin 1989

## Description

La présente invention concerne le domaine de la préparation d'un fluide cryogénique à l'état liquide de haute pureté, en particulier d'hélium liquide, d'argon liquide ou d'azote liquide de haute pureté, c'est-à-dire exempt de l'une au moins de ses impuretés, du type, notamment, hydrogène, monoxyde de carbone ou oxygène.

Plus particulièrement, l'invention concerne un perfectionnement aux procédés et dispositifs de préparation d'un fluide cryogénique à l'état liquide de haute pureté, en particulier d'hélium liquide, d'argon liquide ou d'azote liquide de haute pureté.

L'azote liquide ou gazeux est préparé de façon habituelle par distillation cryogénique de l'air, laquelle distillation est effectuée dans une boîte froide contenant une ou plusieurs colonnes de distillation. L'azote ainsi obtenu a une pureté qui est suffisante pour la plupart de ses applications. Toutefois, certains secteurs d'activité, telle l'industrie électronique, en particulier la fabrication des semi-conducteurs ou d'autres composants, ou l'industrie pharmaceutique, à des fins d'analyse ou de recherche, requièrent de l'azote liquide de haute pureté. Selon l'application, l'azote liquide doit être sensiblement exempt de l'une au moins de ses impuretés : hydrogène, oxygène ou monoxyde de carbone.

En d'autres termes, le taux d'impuretés contenues dans l'azote liquide ne doit pas dépasser quelques ppb (partie par milliard en volume).

Les impuretés, tels l'hydrogène ou le monoxyde de carbone, peuvent être éliminées de l'air à distiller ou de l'azote gazeux résultant de la distillation cryogénique.

A cette fin, des procédés de purification ont déjà été proposés par exemple, dans le brevet US n° 4,869,883, où lesdites impuretés sont éliminées par oxydation par réaction avec une quantité suffisante d'oxygène en présence d'un catalyseur en donnant de l'eau et du dioxyde de carbone, lesquels sont ensuite éliminés par adsorption.

La demande de brevet JP-A-05/079754 décrit, quant à elle, un procédé pour éliminer les impuretés dioxyde de carbone, eau et monoxyde de carbone, contenues dans de l'azote liquide.

Selon ce procédé, de l'azote liquide est soutiré d'une colonne de distillation d'air, envoyé dans une colonne d'absorption remplie d'une zéolite synthétique de type A, en vue de l'absorption des impuretés, puis est renvoyé dans la colonne de distillation.

La demande de brevet FR n° 93 15958 décrit un procédé permettant de traiter directement de l'azote liquide en vue de le purifier et d'obtenir de l'azote liquide de haute pureté, c'est-à-dire substantiellement exempt en l'une au moins des impuretés hydrogène monoxyde de carbone et oxygène, où l'azote liquide à purifier est mis au contact d'un adsorbant permettant l'adsorption de l'une au moins desdites impuretés ; l'azote de haute pureté ainsi produit est ensuite récupéré. L'adsorbeur mis en oeuvre dans ce procédé est choisi dans le groupe constitué par les zéolites naturelles et synthétiques et les oxydes métalliques poreux.

En outre, il existe des procédés analogues permettant d'épurer les autres fluides cryogéniques à l'état liquide ou "liquides" cryogéniques, tels l'hélium liquide ou l'argon liquide, utilisables, notamment, dans l'industrie électronique.

Ainsi, le document JP-A-02030607, WPi, n° XP 182417, décrit un procédé de purification d'azote, dans lequel de l'azote gazeux contenant des impuretés de type O₂ est refroidi par contact avec de l'azote liquide purifié et le mélange gazeux ainsi obtenu est soumis à une étape de purification par adsorption des impuretés O₂ sur un tamis moléculaire. L'adsorbeur est refroidi avant purification par la mélange gazeux qui y est introduit.

Toutefois, si ces procédés classiques permettent d'obtenir des "liquides" cryogéniques de haute pureté, tels l'hélium, l'argon ou l'azote liquide de haute pureté, lorsqu'ils fonctionnent en continu, des problèmes apparaissent lorsqu'on les fait travailler par phases ou cycles successifs d'épuration, séparés par des phases d'arrêt plus ou moins longues du dispositif d'épuration, c'est-à-dire de façon discontinue, ce qui est généralement le cas sur les sites industriels.

En effet, l'azote liquide, par exemple, utilisé sur un site industriel peut être produit directement sur ledit site, en fonction des besoins, puis être immédiatement utilisé ou alors stocké en vue d'une utilisation ultérieure, ou encore être produit hors site puis acheminé sur le site d'utilisation, par exemple au moyen d'un camion.

Cependant, l'élimination des impuretés de l'azote est très rarement effectuée de façon continue ; cette épuration a généralement lieu par phases ou cycles d'épuration successifs, lesquels peuvent être plus ou moins espacés dans le temps.

A titre d'exemple non limitatif, on peut citer le cas de la production d'azote hors site puis de son acheminement sur site au moyen d'un camion. L'azote liquide déchargé du camion est tout d'abord transféré vers un dispositif permettant l'élimination des impuretés contenues dans ledit azote liquide à purifier ; un tel dispositif est communément appelé réacteur. L'épuration de l'azote liquide y est effectuée par contact avec un adsorbant, lequel piège sélectivement les impuretés de l'azote. L'azote de haute pureté ainsi obtenu est ensuite acheminé vers son lieu d'utilisation ou, plus généralement, vers un lieu de stockage jusqu'à une utilisation ultérieure. La phase d'épuration dure donc uniquement pendant la durée du déchargement du camion (c'est-à-dire de une à plusieurs heures) et se termine lorsque le déchargement a été effectué.

Une nouvelle phase d'épuration n'aura donc lieu que lors du déchargement du prochain camion, ceci pouvant être plus ou moins espacé dans le temps. Or, on a remarqué que lorsque la durée de la phase d'arrêt entre deux phases ou cycles d'épuration successifs se prolonge dans le temps, on assiste généralement à une migration du front des polluants piégés par l'adsorbant contenu dans le réacteur ; ladite migration étant due à un réchauffement de l'adsorbeur, consécutif à des entrées thermiques dans le réacteur.

En d'autres termes, plus la durée de la phase d'arrêt entre deux phases d'épuration successives N et N+1 augmente dans le temps, plus la quantité de polluants retrouvés en aval du réacteur est importante. Une telle migration du front des polluants, entre deux phases d'épuration successives, nuit donc à une obtention et à une conservation d'azote de haute pureté. En effet, l'azote liquide épuré en ses contaminants, en particulier monoxyde de carbone et oxygène, lors d'une phase d'épuration N+1 se verra contaminé par les polluants extraits durant les phases d'épuration précédentes, à savoir N, N-1, etc...

Il s'en suit que l'azote liquide ainsi obtenu, lequel contient des impuretés relarguées, ne pourra être utilisé dans les applications qui requièrent de l'azote de haute pureté.

La présente invention a donc pour but de proposer un procédé et un dispositif pour la préparation d'un fluide cryogénique à l'état liquide de haute pureté substantiellement exempt de l'une au moins de ses impuretés, tel l'azote liquide exempt en l'une ou plusieurs de ses impuretés, hydrogène, monoxyde de carbone et oxygène, ne présentant pas les inconvénients de l'art antérieur ci-dessus mentionné. En particulier, l'invention a pour but de fournir un procédé et un dispositif permettant d'éliminer ou de minimiser une migration du front des polluants, piégés par l'adsorbant du réacteur, pendant les phases d'arrêt plus ou moins longues séparant les différents cycles d'épuration successifs, lesquels sont liés, par exemple, aux déchargements successifs de camions.

Un autre objectif de l'invention est de proposer un procédé et un dispositif fiables dans le temps, c'est-à-dire qui permettent, d'une part, d'éviter ou de minimiser la migration du front des polluants lorsque les phases d'épuration successives sont séparées par des phases d'arrêt ayant des durées importantes, par exemple des durées pouvant atteindre une ou plusieurs semaines, et qui, d'autre part, permettent d'obtenir un fluide cryogénique à l'état liquide de haute pureté, en particulier de l'hélium, de l'azote ou de l'argon liquide de haute pureté, même après un nombre important de phases d'épuration successives et/ou après traitement de grandes quantités de fluide cryogénique (plusieurs centaines de tonnes par exemple).

Le procédé et le dispositif selon l'invention sont également économiquement intéressants car ils ne requièrent pas des investissements importants par rapport aux matériels classiques, tout en permettant une élimination efficace des contaminants.

L'invention consiste alors en un procédé de préparation d'un fluide cryogénique à l'état liquide de haute pureté, dans lequel on met le fluide cryogénique à l'état liquide à purifier contenant des impuretés en contact avec un adsorbant permettant l'adsorption de l'une au moins desdites impuretés et on récupère ledit fluide cryogénique à l'état liquide de haute pureté substantiellement exempt en l'une au moins desdites impuretés, caractérisé en ce qu'on maintient un refroidissement d'au moins une partie de l'adsorbant au moyen dudit fluide cryogénique à l'état liquide épuré, pendant au moins une partie de la durée de la phase d'arrêt séparant un cycle d'épuration N et un cycle d'épuration N+1 successifs, ladite durée pouvant atteindre une ou plusieurs semaines.

De préférence, le refroidissement d'au moins une partie de l'adsorbant est réalisé par contact direct avec le fluide cryogénique à l'état liquide de haute pureté.

Préférentiellement, l'adsorbant est refroidi par immersion dans le fluide cryogénique à l'état liquide de haute pureté.

Avantageusement, on maintient le refroidissement de l'adsorbant pendant sensiblement toute la durée de la phase d'arrêt séparant un cycle d'épuration N et un cycle d'épuration N+1 successifs.

De préférence, l'adsorbant est choisi dans le groupe constitué par les zéolites naturelles et synthétiques, échangées ou non, et les oxydes métalliques poreux.

Avantageusement, la zéolite est une mordénite ou une zéolite synthétique choisie dans le groupe formé par la zéolite A, la zéolite X et la zéolite Y.

Préférentiellement, la zéolite est une zéolite échangée par au moins un ion d'un métal choisi dans le groupe formé par le lithium, le calcium, le baryum, le strontium, le zinc, le fer, l'argent et le cuivre.

Préférentiellement encore, la zéolite est échangée par un ion cuivre ou argent.

Selon un mode préféré de l'invention, la zéolite est une zéolite 5A échangée par un ion cuivre ou argent.

Selon un autre mode de réalisation de l'invention, l'oxyde métallique poreux comprend au moins un oxyde d'un métal de transition.

De préférence, ledit: oxyde métallique poreux comprend un oxyde mixte de cuivre et de manganèse, telle qu'une hopcalite.

Préférentiellement, le fluide cryogénique à l'état liquide est choisi dans le groupe formé par l'hélium liquide, l'argon liquide et l'azote liquide.

Avantageusement, l'azote liquide est épuré en l'une au moins de ses impuretés, hydrogène, monoxyde de carbone et oxygène.

Afin d'obtenir une élimination de toutes les impuretés pouvant se trouver dans le fluide cryogénique à l'état liquide, en particulier dans de l'azote liquide, il est possible de combiner zéolite et oxyde métallique poreux, en deux lits placés en série. Ainsi, on obtiendra un premier lit comprenant de l'hopcalite par exemple permettant une élimination sélective d'oxygène et de monoxyde de carbone et un deuxième lit comprenant, par exemple, une zéolite échangée permettant l'élimination du monoxyde de carbone, résiduel et de l'hydrogène.

D'un point de vue industriel, il est avantageux d'utiliser un adsorbant du type hopcalite, car il permet d'épurer simultanément le monoxyde de carbone et l'oxygène à un niveau très bas (inférieur au ppb).

L'invention concerne également un dispositif pour la mise en oeuvre du procédé selon l'invention comprenant au moins un réacteur contenant au moins un adsorbant permettant l'élimination de l'une au moins des impuretés contenues dans le fluide cryogénique à l'état liquide à purifier, et relié par une conduite amont à une source de fluide cryogénique à l'état liquide à purifier et par une conduite aval à au moins un réservoir de stockage de fluide cryogénique à l'état liquide de haute pureté, caractérisé en ce qu'il comprend au moins une conduite de maintien en froid agencée pour fournir un flux de fluide cryogénique à l'état liquide de haute pureté, pour refroidir au moins une partie de l'adsorbant, pendant au moins une partie de la phase de temps séparant un cycle d'épuration N et un cycle d'épuration N+1 successifs, ledit fluide cryogénique à l'état liquide de haute pureté étant issu d'au moins une source de fluide cryogénique à l'état liquide de haute pureté.

De préférence, la conduite de maintien en froid est reliée par l'une au moins de ses extrémités amont ou aval à au moins une portion aval ou amont de la conduite aval.

Selon un autre mode de réalisation de l'invention, la conduite de maintien en froid est reliée par l'une au moins de ses extrémités amont ou aval à au moins une source de fluide cryogénique à l'état liquide de haute pureté et/ou à au moins un réacteur.

Préférentiellement, la source de fluide cryogénique à l'état liquide de haute pureté est au moins un réservoir de stockage.

Avantageusement, au moins un filtre mécanique est implanté sur la conduite aval entre les extrémités amont et aval de la conduite de maintien en froid.

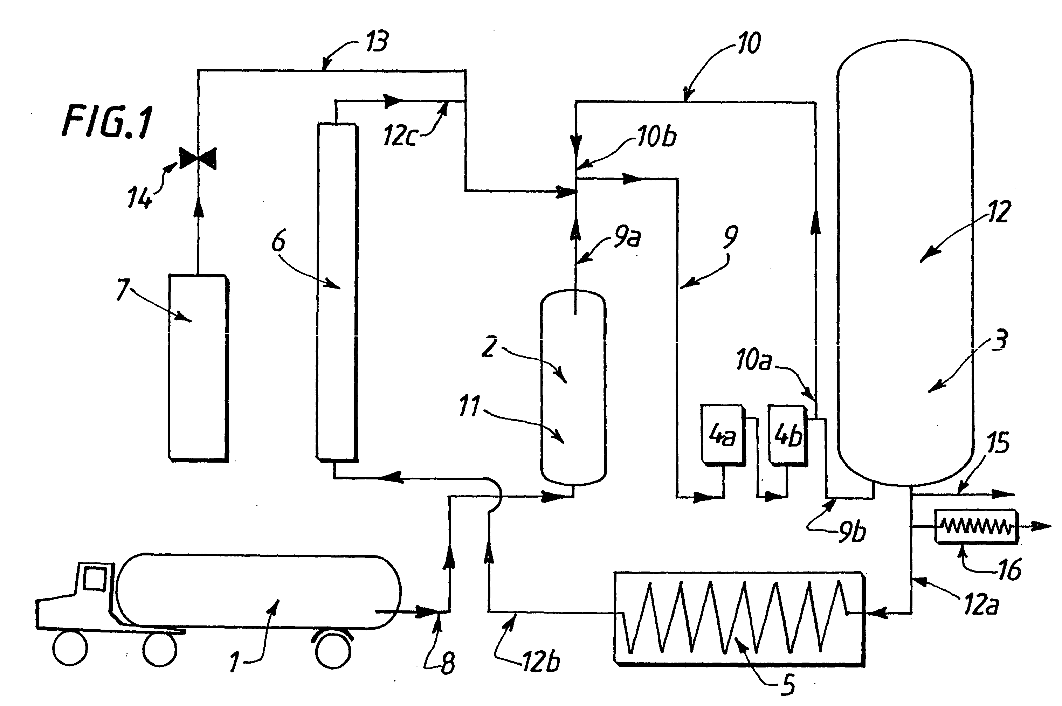

L'invention va maintenant être décrite, de manière non limitative, plus en détails, en référence à la figure 1 annexée, laquelle représente un dispositif de préparation d'azote liquide de haute pureté substantiellement exempt de l'une au moins de ses impuretés hydrogène, monoxyde de carbone et oxygène, conforme à l'invention.

Sur la figure 1, un réacteur 2 contenant un adsorbant 11 est relié d'une part par l'intermédiaire d'une conduite amont 8 à une source 1 d'un fluide cryogénique à l'état liquide, ici de l'azote liquide, à épurer et, d'autre part, à un réservoir de stockage 3 d'azote liquide de haute pureté 12 par l'intermédiaire d'une conduite aval 9 ; une batterie de deux filtres 4a et 4b étant interposée entre le réacteur 2 et le réservoir de stockage 3.

Les références 15 et 16 désignent respectivement les sorties utilisateur d'azote de haute pureté liquide ou gazeux.

Avant de procéder à un cycle d'épuration, on procède à la purge et à la mise en froid préalable de la partie de l'équipement laissée à chaud entre deux phases d'épuration, c'est-à-dire pendant la phase d'arrêt du dispositif, à savoir notamment certaines parties de canalisations 8 et 9 et la batterie de filtres 4a et 4b ; cette purge et mise à froid sont effectuées par manipulation de vannes adéquates. Ensuite, après connexion de la source 1 d'azote liquide à épurer à la conduite amont 8, on achemine l'azote à épurer depuis la source 1 jusqu'au réacteur 2 via la conduite 8. L'épuration s'effectue dans le réacteur 2 par adsorption des contaminants de l'azote liquide à épurer sur l'adsorbant 11. L'azote liquide de haute pureté obtenu après adsorption des contaminants est acheminé via la conduite 9, comprenant une portion amont 9a et une portion aval 9b, à travers la batterie de filtres mécaniques 4a et 4b jusqu'au réservoir de stockage 3.

Entre un cycle d'épuration N et un cycle d'épuration N+1 à venir et afin d'éviter la migration du front de contaminants adsorbés sur l'adsorbant lors des cycles d'épuration précédents (N, N-1,...), on maintient durant, de préférence, toute la durée de la phase d'arrêt séparant les cycles N et N+1, un refroidissement de l'adsorbant 11 au moyen d'azote liquide de haute pureté 12 issu d'au moins une source d'azote de haute pureté. Ici, on utilise avantageusement l'azote de haute pureté stocké dans le réservoir 3, lequel azote est acheminé via la conduite de maintien en froid 10 isolée thermiquement et correctement dimensionnée. Cette conduite de maintien en froid 10 relie donc le réservoir 3 de stockage d'azote de haute pureté 12 au réacteur 2 et permet d'alimenter ledit réacteur en azote liquide de haute pureté afin de maintenir l'adsorbant refroidi par immersion dans de l'azote de haute pureté sensiblement en permanence entre un cycle N et un cycle N+1 successifs. Plus précisément, la partie amont 10a de la conduite de maintien en froid 10 est reliée à la portion aval 9b de la conduite aval 9, laquelle portion aval 9b est comprise entre les filtres 4a et 4b et la source d'azote de haute pureté, ici le réservoir de stockage 3. De même, la partie aval 10b de la conduite 10 est connectée à la portion amont 9a de la conduite aval 9, laquelle portion amont 9a est comprise entre les filtres 4a et 4b, et le réacteur 2.

Grâce à ce dispositif, on évite une contamination de l'azote de haute pureté obtenu lors d'un cycle N+1 par des contaminants adsorbés lors des cycles précédents en supprimant tout risque de migration des fronts d'adsorption.

De plus, on constate qu'aucune perte d'azote liquide franc n'est à déplorer dans la mesure où l'azote utilisé pour maintenir l'adsorbant en froid sera, non pas envoyé à l'atmosphère, mais réacheminé vers le stockage 3 lors d'un cycle d'épuration N+1 ; on travaille donc en circuit fermé.

Toutefois,il arrive parfois que les entrées thermiques engendrent une vaporisation partielle de l'azote liquide contenue dans l'adsorbeur, laquelle vaporisation est d'autant plus importante que les cycles N et N+1 sont éloignés dans le temps. Cette vaporisation d'azote liquide en azote gazeux entraîne une augmentation de la pression au sein de l'adsorbeur et, parallèlement, une diminution du niveau d'azote liquide contenu dans celui-ci. Pour des raisons de sécurité, notamment le respect de la tenue maximale en pression de l'équipement, on procède à une évacuation, au moins partielle, de l'azote gazeux formé, via des organes de sécurité classiques, connus de l'homme de l'art (soupapes, ...).

Par ailleurs, afin de compenser la diminution du niveau d'azote liquide au sein de l'adsorbeur, on procède, si nécessaire, à un à-point en azote liquide, via la conduite du maintien en froid 10.

Ce dispositif permet également de retarder au maximum les phases de régénération de l'adsorbant. En d'autres termes, il ne sera nécessaire de procéder à une régénération de l'adsorbant qu'après une durée d'utilisation relativement longue dans le temps (par exemple plusieurs mois) ou alors, dans le cas de cycles d'épuration rapprochés, cette régénération pourra n'avoir lieu qu'après épuration de quantités importantes d'azote liquide, par exemple, plusieurs centaines de tonnes.

Préférentiellement, une telle phase de régénération n'interviendra qu'après épuration d'une quantité donnée d'azote liquide. On procédera alors à la vidange du réacteur 2 puis au soufflage de l'adsorbant à contre courant à l'aide, d'abord, d'azote à température ambiante (environ 20°), puis d'azote à une température d'environ 200° ; l'azote utilisé à cette fin est issu du réservoir de stockage 3 acheminé vers un vaporisateur atmosphérique 5 via une conduite 12a puis vers un réchauffeur d'azote 6 via une conduite 12b avant d'être introduit dans le réacteur via une conduite 12c. La réactivation de l'adsorbant 11 est effectuée à l'aide d'un mélange gazeux hydrogène/azote (par exemple 2 % H_{2/}N₂); la source d'hydrogène 7 pouvant être par exemple une ou plusieurs bouteilles contenant de l'hydrogène sous pression, lesquelles sont reliées à la conduite 12c par l'intermédiaire d'une conduite 13. Le débit d'hydrogène injecté dans l'azote circulant dans la conduite 12c est ajusté, via un organe de réglage 14, en vue de réaliser le mélange H_{2/}N₂ désiré. Après réactivation, l'adsorbant est refroidi par soufflage d'azote à température ambiante, le refroidissement de l'adsorbant à l'aide d'azote liquide ne sera effectué qu'au cycle d'épurations à venir.

Le procédé mis en oeuvre ici est donc simple et peu onéreux et permet de garantir de l'azote liquide de haute pureté ou tout autre fluide cryogénique à l'état liquide de haute pureté, c'est-à-dire contenant moins de quelques ppb (partie par milliards) d'impuretés.

L'exemple qui suit permet d'illustrer l'efficacité du procédé et du dispositif selon l'invention.

### EXEMPLE

Le procédé selon l'invention a été mis en oeuvre grâce à un dispositif analogue à celui exposé ci-avant et appliqué, à titre d'exemple à l'épuration d'azote liquide.

L'azote liquide à épurer est produit hors site, puis acheminé jusqu'au site d'épuration au moyen d'un camion ; la source d'azote liquide à épurer est donc dans ce cas, comme précédemment, le camion.

L'adsorbant mis en oeuvre est, quant à lui, une hopcalite, laquelle permet une élimination sélective par adsorption de l'oxygène et du monoxyde de carbone contenus dans l'azote liquide à épurer.

Après cinq mois d'utilisation sans phase de régénération, ce qui correspond approximativement à une épuration d'environ 700 tonnes d'azote liquide, des analyses ont été réalisées sur des échantillons d'azote liquide épuré, prélevés en aval du réacteur à l'aide d'analyseurs spécifiques et classiques ayant des seuils de détection du niveau du ppb. Les résultats obtenus montrent que l'azote liquide de haute pureté ainsi obtenu comprend des quantités de polluants monoxyde de carbone et oxygène inférieures au ppb.

Ces résultats tout à fait surprenants ont pu être obtenus grâce à un maintien en froid systématique de l'adsorbant au moyen d'azote liquide épuré pendant les phases d'arrêt du dispositif entre les cycles successifs d'épuration ; lesdits cycles ayant été espacés volontairement de périodes de temps supérieures ou égales à dix jours.

Le procédé et le dispositif de l'invention peuvent être appliqués avec succès, non seulement à l'épuration d'azote liquide, mais aussi à l'épuration d'autres fluides cryogéniques à l'état liquide, tels l'argon liquide ou l'hélium liquide, par exemple.

## Revendications

1. Procédé de préparation d'un fluide cryogénique à l'état liquide de haute pureté, dans lequel on met le fluide cryogénique à l'état liquide à purifier contenant des impuretés en contact avec un adsorbant permettant l'adsorption de l'une au moins desdites impuretés et on récupère ledit fluide cryogénique à l'état liquide de haute pureté substantiellement exempt de l'une au moins desdites impuretés, **caractérisé en ce qu**'on maintient un refroidissement d'au moins une partie de l'adsorbant au moyen dudit fluide cryogénique à l'état liquide épuré, pendant au moins une partie de la durée de la phase d'arrêt séparant un cycle d'épuration N et un cycle d'épuration N+1 successifs, ladite durée pouvant atteindre une ou plusieurs semaines.

2. Procédé selon la revendication 1, **caractérisé en ce que** le refroidissement d'au moins une partie de l'adsorbant est réalisé par contact direct avec ledit fluide cryogénique à l'état liquide de haute pureté.

3. Procédé selon l'une des revendications 1 et 2, **caractérisé en ce que** l'adsorbant est refroidi par immersion dans ledit fluide cryogénique à l'état liquide de haute pureté.

4. Procédé selon l'une des revendications 1 à 3, **caractérisé en ce qu**'on maintient le refroidissement de l'adsorbant pendant sensiblement toute la durée de la phase d'arrêt séparant un cycle d'épuration N et un cycle d'épuration N+1 successifs.

5. Procédé selon l'une quelconque des revendications 1 à 4, **caractérisé en ce que** l'adsorbant est choisi dans le groupe constitué par les zéolites naturelles et synthétiques, échangées ou non, et les oxydes métalliques poreux.

6. Procédé selon la revendication 5, **caractérisé en ce que** la zéolite est une mordénite ou une zéolite synthétique choisie dans le groupe formé par la zéolite A, la zéolite X et la zéolite Y.

7. Procédé selon la revendication 6, **caractérisé en ce que** la zéolite est une zéolite échangée par au moins un ion d'un métal choisi dans le groupe formé par le lithium, le calcium, le baryum, le strontium, le zinc, le fer, l'argent et le cuivre.

8. Procédé selon la revendication 7, **caractérisé en ce que** la zéolite est échangée par un ion cuivre ou argent.

9. Procédé selon la :revendication 8, **caractérisé en ce que** la zéolite est une zéolite 5A échangée par un ion cuivre ou argent.

10. Procédé selon la revendication 5, **caractérisé en ce que** l'oxyde métallique poreux comprend au moins un oxyde d'un métal de transition.

11. Procédé selon la revendication 10, **caractérisé en ce que** ledit oxyde métallique poreux comprend un oxyde mixte de cuivre et de manganèse, telle qu'une hopcalite.

12. Procédé selon l'une des revendications 1 à 11, **caractérisé en ce que** le fluide cryogénique à l'état liquide est choisi dans le groupe formé par l'hélium liquide, l'argon liquide et l'azote liquide.

13. Procédé selon la revendication 12, **caractérisé en ce que** l'azote liquide est épuré en l'une au moins de ses impuretés, hydrogène (H₂), monoxyde de carbone (CO) et oxygène (O₂).

14. Dispositif pour la mise en oeuvre du procédé selon l'une des revendications 1 à 13 comprenant au moins un réacteur (2) contenant au moins un adsorbant (11) permettant l'élimination de l'une au moins des impuretés contenues dans un fluide cryogénique à l'état liquide à purifier, et relié par une conduite amont (8) à une source (1) de fluide cryogénique à l'état liquide à purifier et par une conduite aval (9) à au moins un réservoir de stockage (3) dudit fluide cryogénique à l'état liquide de haute pureté (12), **caractérisé en ce qu**'il comprend au moins une conduite de maintien en froid (10) agencée pour fournir un flux de fluide cryogénique à l'état liquide de haute pureté pour refroidir au moins une partie de l'adsorbant, pendant au moins une partie de la durée de la phase d'arrêt séparant un cycle d'épuration N et un cycle d'épuration N+1 successifs, ledit fluide cryogénique de haute pureté étant issu d'au moins une source de fluide cryogénique à l'état liquide de haute pureté.

15. Dispositif selon la revendication 14, **caractérisé en ce que** la conduite (10) de maintien en froid est reliée par l'une au moins de ses extrémités amont (10a) ou aval (10b) à au moins une portion aval (9b) ou amont (9a) de la conduite aval (9).

16. Dispositif selon la revendication 14, **caractérisé en ce que** la conduite (10) de maintien en froid est reliée par l'une au moins de ses extrémités amont (10a) ou aval (10b) à au moins une source de fluide cryogénique à l'état liquide de haute pureté et/ou à au moins un réacteur (2).

17. Dispositif selon l'une des revendications 14 à 16, **caractérisé en ce que** la source de fluide cryogénique à l'état liquide de haute pureté est au moins un réservoir de stockage (3).

18. Dispositif selon l'une des revendications 14 à 17, **caractérisé en ce qu**'au moins un filtre (4a,4b) est implanté sur la conduite aval (9) entre les extrémités amont (10a) et aval (10b) de la conduite (10) de maintien en froid.

## Claims

1. Process for the preparation of a cryogenic fluid in the high purity liquid state, in which the cryogenic fluid in the liquid state containing impurities to be purified is placed in contact with an adsorbent permitting the adsorption of at least one of the said impurities and the said cryogenic fluid is recovered in the high purity liquid state, substantially free from at least one of the said impurities, **characterized in that** cooling of at least a portion of the adsorbent is maintained by means of the said purified cryogenic fluid in the liquid state for at least a portion of the period of the stoppage stage separating a purification cycle N and a purification cycle N+1 which are successive, the said period possibly extending to one or several weeks.

2. Process according to Claim 1, **characterized in that** the cooling of at least a portion of the adsorbent is carried out by direct contact with the said cryogenic fluid in the high purity liquid state.

3. Process according to either of Claims 1 and 2, **characterized in that** the adsorbent is cooled by immersion in the said cryogenic fluid in the high purity liquid state.

4. Process according to one of Claims 1 to 3, **characterized in that** the cooling of the adsorbent is maintained substantially throughout the period of the stoppage stage separating a purification cycle N and a purification cycle N+1 which are successive.

5. Process according to any one of Claims 1 to 4, **characterized in that** the adsorbent is chosen from the group consisting of natural and synthetic zeolites, optionally exchanged, and porous metal oxides.

6. Process according to Claim 5, **characterized in that** the zeolite is a mordenite or a synthetic zeolite chosen from the group made up of zeolite A, zeolite X and zeolite Y.

7. Process according to Claim 6, **characterized in that** the zeolite is a zeolite exchanged with at least one ion of a metal chosen from the group made up of lithium, calcium, barium, strontium, zinc, iron, silver and copper.

8. Process according to Claim 7, **characterized in that** the zeolite is exchanged with a copper or silver ion.

9. Process according to Claim 8, **characterized in that** the zeolite is a zeolite 5A exchanged with a copper or silver ion.

10. Process according to Claim 5, **characterized in that** the porous metal oxide includes at least one oxide of a transition metal.

11. Process according to Claim 10, **characterized in that** the said porous metal oxide includes a mixed copper manganese oxide such as a Hopcalite.

12. Process according to one of Claims 1 to 11, **characterized in that** the cryogenic fluid in the liquid state is chosen from the group made up of liquid helium, liquid argon and liquid nitrogen.

13. Process according to Claim 12, **characterized in that** the liquid nitrogen is purified of at least one of its impurities, hydrogen (H₂), carbon monoxide (CO) and oxygen (O₂).

14. Device for implementing the process according to one of Claims 1 to 13, including at least one reactor (2) containing at least one adsorbent (11) permitting the removal of at least one of the impurities present in a cryogenic fluid in the liquid state to be purified, and connected by an upstream conduit (8) to a source (1) of cryogenic fluid in the liquid state to be purified and by a downstream conduit (9) to at least one storage tank (3) for the said cryogenic fluid in the high purity liquid state (12), **characterized in that** it includes at least one conduit for keeping cold (10), arranged for supplying a flow of cryogenic fluid in the high purity liquid state, to cool at least a portion of the adsorbent during at least a portion of the period of the stoppage stage separating a purification cycle N and a purification cycle N+1 which are successive, the said cryogenic fluid of high purity originating from at least one source of cryogenic fluid in the high purity liquid state.

15. Device according to Claim 14, **characterized in that** the conduit (10) for keeping cold is connected by at least one of its upstream (10a) or downstream (10b) ends to at least one downstream (9b) or upstream (9a) portion of the downstream conduit (9).

16. Device according to Claim 14, **characterized in that** the conduit (10) for keeping cold is connected by at least one of its upstream (10a) or downstream (10b) ends to at least one source of cryogenic fluid in the high purity liquid state and/or to at least one reactor (2).

17. Device according to one of Claims 14 to 16, **characterized in that** the source of cryogenic fluid in the high purity liquid state is at least one storage tank (3).

18. Device according to one of Claims 14 to 17, **characterized in that** at least one filter (4a, 4b) is fitted in the downstream conduit (9) between the upstream (10a) and downstream (10b) ends of the conduit (10) for keeping cold.

## Patentansprüche

1. Verfahren zur Herstellung eines kryogenen Fluids in hochreinem flüssigem Zustand, bei dem man das Verunreinigungen enthaltende, zu reinigende kryogene Fluid in flüssigem Zustand mit einem Adsorptionsmittel, das die Adsorption von mindestens einer der Verunreinigungen gestattet, in Berührung bringt und das von mindestens einer der Verunreinigungen weitgehend freie kryogene Fluid in hochreinem flüssigem Zustand zurückgewinnt, **dadurch gekennzeichnet**, daß man mindestens einen Teil des Adsorptionsmittels mit dem kryogenen Fluid in gereinigtem flüssigem Zustand über mindestens einen Teil der Dauer der Stillstandsphase zwischen einem Reinigungszyklus N und einem darauffolgenden Reinigungszyklus N+1 unter Kühlung hält, wobei die Dauer bis zu einer oder mehreren Wochen betragen kann.

2. Verfahren nach Anspruch 1, **dadurch gekennzeichnet**, daß die Kühlung von mindestens einem Teil des Adsorptionsmittels durch direkten Kontakt mit dem kryogenen Fluid in hochreinem flüssigem Zustand erfolgt.

3. Verfahren nach Anspruch 1 oder 2, **dadurch gekennzeichnet**, daß man das Adsorptionsmittel durch Eintauchen in das kryogene Fluid in hochreinem flüssigem Zustand kühlt.

4. Verfahren nach einem der Ansprüche 1 bis 3, **dadurch gekennzeichnet**, daß man das Adsorptionsmittel im wesentlichen über die gesamte Dauer der Stillstandsphase zwischen einem Reinigungszyklus N und einem darauffolgenden Reinigungszyklus N+1 unter Kühlung hält.

5. Verfahren nach einem der Ansprüche 1 bis 4, **dadurch gekennzeichnet**, daß man das Adsorptionsmittel aus der Gruppe bestehend aus gegebenenfalls ausgetauschten natürlichen und synthetischen Zeolithen und porösen Metalloxiden auswählt.

6. Verfahren nach Anspruch 5, **dadurch gekennzeichnet**, daß es sich bei dem Zeolith um einen Mordenit oder einen synthetischen Zeolith aus der Gruppe bestehend aus Zeolith A, Zeolith X und Zeolith Y handelt.

7. Verfahren nach Anspruch 6, **dadurch gekennzeichnet**, daß es sich bei dem Zoelith um einen mit mindestens einem Ion eines Metalls aus der Gruppe bestehend aus Lithium, Calcium, Barium, Strontium, Zink, Eisen, Silber und Kupfer ausgetauschten Zeolith handelt.

8. Verfahren nach Anspruch 7, **dadurch gekennzeichnet**, daß der Zeolith mit einem Kupfer- oder Silberion ausgetauscht ist.

9. Verfahren nach Anspruch 8, **dadurch gekennzeichnet**, daß es sich bei dem Zeolith um einen mit einem Kupfer- oder Silberion ausgetauschten Zeolith 5A handelt.

10. Verfahren nach Anspruch 5, **dadurch gekennzeichnet**, daß das poröse Metalloxid mindestens ein Übergangsmetalloxid enthält.

11. Verfahren nach Anspruch 10, **dadurch gekennzeichnet**, daß das poröse Metalloxid ein Kupfer-Mangan-Mischoxid, wie einen Hopcalit, enthält.

12. Verfahren nach einem der Ansprüche 1 bis 11, **dadurch gekennzeichnet**, daß man das kryogene Fluid in flüssigem Zustand aus der Gruppe bestehend aus flüssigem Helium, flüssigem Argon und flüssigem Stickstoff auswählt.

13. Verfahren nach Anspruch 12, **dadurch gekennzeichnet**, daß man flüssigen Stickstoff von mindestens einer seiner Verunreinigungen Wasserstoff (H₂), Kohlenmonoxid (CO) und Sauerstoff (O₂) befreit.

14. Vorrichtung zur Durchführung des Verfahrens nach einem der Ansprüche 1 bis 13 mit mindestens einem Reaktor (2), der mindestens ein Adsorptionsmittel (11), das die Abtrennung von mindestens einer der in einem zu reinigenden kryogenen Fluid in flüssigem Zustand enthaltenen Verunreinigungen gestattet, enthält und über eine stromaufwärtige Leitung (8) mit einer Quelle (1) von zu reinigendem kryogenem Fluid in flüssigem Zustand und über eine stromabwärtige Leitung (9) mit mindestens einem Speicherbehälter (3) für das kryogene Fluid in hochreinem flüssigem Zustand (12) verbunden ist, **dadurch gekennzeichnet**, daß sie mindestens eine Kalthalteleitung (10) aufweist, die einen Strom von kryogenem Fluid in hochreinem flüssigem Zustand zur Kühlung von mindestens einem Teil des Adsorptionsmittels über mindestens einen Teil der Dauer der Stillstandsphase zwischen einem Reinigungszyklus N und einem darauffolgenden Reinigungszyklus N+1 liefert, wobei das kryogene Fluid in hochreinem flüssigem Zustand aus mindestens einer Quelle von kryogenem Fluid in hochreinem flüssigem Zustand stammt.

15. Vorrichtung nach Anspruch 14, **dadurch gekennzeichnet**, daß die Kalthalteleitung (10) über ihr stromaufwärtiges Ende (10a) und/oder ihr stromabwärtiges Ende (10b) mit mindestens einem stromabwärtigen Teil (9b) oder stromaufwärtigen Teil (9a) der stromabwärtigen Leitung (9) verbunden ist.

16. Vorrichtung nach Anspruch 14, **dadurch gekennzeichnet**, daß die Kalthalteleitung (10) über ihr stromaufwärtiges Ende (10a) und/oder ihr stromabwärtiges Ende (10b) mit mindestens einer Quelle von kryogenem Fluid in hochreinem flüssigem Zustand und/oder mindestens einem Reaktor (2) verbunden ist.

17. Vorrichtung nach einem der Ansprüche 14 bis 16, **dadurch gekennzeichnet**, daß es sich bei der Quelle von kryogenem Fluid in hochreinem flüssigem Zustand um mindestens einen Speicherbehälter (3) handelt.

18. Vorrichtung nach einem der Ansprüche 14 bis 17, **dadurch gekennzeichnet**, daß in der stromabwärtigen Leitung (9) mindestens ein Filter (4a, 4b) zwischen dem stromaufwärtigen Ende (10a) und dem stromabwärtigen Ende (10b) der Kalthalteleitung (10) eingesetzt ist.
